# FASCICULE DE BREVET EUROPEEN

(11) **EP 4 281 325 B1**
(45) Date de publication et mention de la délivrance du brevet: **03.06.2026**
(21) Numéro de dépôt: 22700951.1
(22) Date de dépôt: 18.01.2022
(51) Int. Cl.: B60Q 3/283, B60Q 3/64, B60Q 3/78, B62D 1/06, B62D 1/04, B60K 35/50, B60K 35/60, B60K 37/20

(54) **DISPOSITIF LUMINEUX DE VOLANT DE VÉHICULE**
BELEUCHTUNGSVORRICHTUNG FÜR EIN FAHRZEUGLENKRAD
VEHICLE STEERING WHEEL LIGHTING DEVICE

(30) Priorité: 20.01.2021 FR 2100535
(43) Date de publication de la demande: 29.11.2023
(73) Titulaire: Autoliv Development AB, 447 83 Vårgårda (SE)
(72) Inventeur: BERTRAND, Olivier, 16240 Courcome (FR); DOURSOUX, Hugues, 86190 Latillé (FR); SAGNA, Boubacar, 95800 Paris (FR); HUGAUD, Pascal, 78600 Le Mesnil Le Roi (FR)
(74) Mandataire: Poindron, Cyrille
(86) Numéro de dépôt international: PCT/EP2022/050943
(87) Numéro de publication internationale: WO 2022/157128

(56) Documents cités:
- DE-A1- 102018 200 591
- FR-A1- 3 096 940
- JP-A- 2010 241 275
- US-A1- 2016 025 281
- US-B1- 6 594 417
- US-B2- 6 748 822

## Description

### Domaine technique de l'invention

La présente invention concerne de manière générale un dispositif lumineux monté dans une jante de volant d'un véhicule automobile.

### État de la technique

Il est connu dans l'art antérieur des dispositifs lumineux installés dans une jante de volant. Le document WO2019048538A1 divulgue un dispositif lumineux installé dans la jante d'un volant. En contrepartie, le système présente des pièces évidées en plastique et ce document ne propose pas de solution pour assurer une absence de déformations de ces pièces. Il est important de limiter les déformations car cela provoque des défauts visuels (jeux, jours, irrégularités...) ou au toucher (bosses, parties déformées...) qui sont à éviter pour une telle pièce d'aspect.

Le document US20160025281 (A1) divulgue une jante de volant ayant un dispositif lumineux avec une pièce porteuse emboitée élastiquement ou clipsée sur une armature. Le document JP2010241275(A) divulgue une jante de volant ayant un dispositif lumineux avec un diffuseur de lumière externe en forme de U engagé avec un corps de maintien.

### Exposé de l'invention

Un but de la présente invention est de répondre aux inconvénients de l'art antérieur mentionnés ci-dessus et en particulier, tout d'abord, de proposer un dispositif lumineux pour une jante de volant, qui limite ou supprime les risques de provoquer des défauts d'aspects sur le volant.

Pour cela un premier aspect de l'invention concerne un dispositif lumineux pour une jante de volant de véhicule, comprenant :
- une pluralité de sources lumineuses, agencées pour émettre de la lumière vers une paroi externe d'affichage de la jante
- un corps de maintien, comprenant une paroi interne avec une ouverture allongée présentant une largeur de passage prédéterminée pour laisser passer la lumière émise vers la paroi externe d'affichage,
- au moins un élément de pontage engagé avec le corps de maintien pour limiter un agrandissement de la largeur de passage prédéterminée,
caractérisé en ce que le au moins un élément de pontage **est** au moins partiellement agencé d'un côté de la paroi interne opposé à la paroi externe d'affichage.

Selon la mise en œuvre ci-dessus, l'ouverture de passage ménagée dans le corps de maintien laisse passer la lumière des sources lumineuses vers l'utilisateur du véhicule. De plus, l'élément de pontage procure un renfort qui relie les deux côtés de l'ouverture de passage pour l'empêcher de s'ouvrir ou de s'élargir, en particulier lors d'une opération de fabrication ultérieure du volant ou lors de l'utilisation du volant par le conducteur. Ainsi, la présence de l'ouverture allongée ne provoque pas d'affaiblissement de la structure du corps de maintien ce qui supprime les variations de géométrie du corps de maintien dans la jante du volant.

Selon un mode de réalisation, l'élément de pontage peut être interconnecté, ou peut être imbriqué avec le corps de maintien. Il a y donc des parties imbriquées les unes dans les autres entre l'élément de pontage et le corps de maintien, si bien que l'assemblage est robuste. En d'autres termes, au moins une paroi et/ou un élément en saillie de l'un de l'élément de pontage ou du corps de maintien pénètre au moins partiellement dans une paroi ou une cavité de réception de l'autre de l'élément de pontage ou du corps de maintien.

Selon un mode de réalisation, le corps de maintien peut être monobloc ou d'un seul tenant. Cela limite les risques de déformations et peut réduire les tolérances.

Selon un mode de réalisation, l'élément de pontage peut être un guide lumière. L'élément de pontage peut avoir au moins une portion qui est traversée par la lumière des sources lumineuses.

Selon un mode de réalisation, le dispositif lumineux peut comprendre plusieurs éléments de pontage. On peut par exemple prévoir un premier élément de pontage sous la forme d'un circuit imprimé et un deuxième élément de pontage sous la forme d'un guide lumière.

Selon un mode de réalisation, l'élément de pontage peut être directement disposé au niveau de la paroi interne. L'élément de pontage peut être directement au contact de la paroi interne ou directement accosté à cette dernière, il peut n'y avoir qu'un seul composant qui assure le pontage.

Selon un mode de réalisation, les sources lumineuses peuvent présenter chacune une surface émettrice de lumière agencée dans un même plan émetteur, dans lequel l'élément de pontage peut présenter une portion de liaison en regard de l'ouverture allongée, agencée dans le plan émetteur et/ou d'un côté du plan émetteur opposé à la paroi externe d'affichage. Selon cette mise en oeuvre, la portion de liaison, qui s'étend en regard et transversalement à l'ouverture allongée, est au même niveau que les sources lumineuses ou d'un côté opposé à la paroi externe, ce qui fait que la portion de liaison ne se trouve pas sur le chemin optique et ne perturbe pas le trajet de la lumière.

Selon un mode de réalisation, l'élément de pontage peut présenter une portion de liaison en regard de l'ouverture allongée, et au moins une source lumineuse est agencée entre l'élément de pontage et l'ouverture allongée.

Selon un mode de réalisation, l'élément de pontage peut présenter une portion de liaison en regard de l'ouverture allongée, et la portion de liaison peut être agencée en regard d'au moins une source lumineuse, et :
- la portion de liaison peut être agencée entre ladite source lumineuse et la paroi externe d'affichage, et la portion de liaison peut être transparente,
ou dans lequel :
- ladite source lumineuse peut être agencée entre la paroi externe d'affichage et la portion de liaison, et la portion de liaison est de préférence opaque.

Selon la mise en œuvre ci-dessus, la portion de liaison, agencée en regard et transversalement à l'ouverture allongée, est transparente si elle risque de se trouver sur le chemin optique vers l'utilisateur, ou peut être opaque si elle ne risque pas de se trouver sur le chemin optique vers l'utilisateur. Typiquement, la portion de liaison peut être une partie d'un guide lumière si elle se trouve sur le chemin optique vers l'utilisateur ou peut être un support des sources lumineuses tel qu'un circuit imprimé si elle ne risque pas de se trouver sur le chemin optique vers l'utilisateur.

Selon un mode de réalisation, l'ouverture allongée peut présenter une longueur supérieure à dix fois, de préférence trente fois, plus préférentiellement quarante fois et très préférentiellement cinquante fois, la largeur de l'ouverture allongée.

Selon un mode de réalisation, l'élément de pontage est agencé entre les deux extrémités longitudinales de l'ouverture allongée, de préférence dans une portion au milieu de l'ouverture allongée, et/ou de préférence à une distance de chaque extrémité longitudinale d'au moins un quart de la longueur de l'ouverture allongée.

Selon un mode de réalisation, le dispositif lumineux peut comprendre un circuit imprimé supportant la pluralité de sources lumineuses, dans lequel l'élément de pontage peut être formé par le circuit imprimé. Selon la mise en oeuvre ci-dessus, le circuit imprimé, typiquement un composant rigide, cumule la fonction de support des sources lumineuses, et procure le pontage de l'ouverture allongée de manière efficace, en raison de sa rigidité intrinsèque.

Selon un mode de réalisation, le dispositif lumineux peut comprendre un écran ou diffuseur de lumière formant la paroi externe d'affichage.

Selon un mode de réalisation, la jante peut comprendre une gaine extérieure, et l'élément de pontage peut être engagé avec le corps de maintien dans une zone exempte de gaine.

Selon un mode de réalisation, le corps de maintien peut servir de support ou de pièce de maintien à la gaine. Typiquement, le corps de maintien peut recevoir et maintenir des rabats de la gaine.

Selon un mode de réalisation, l'ouverture allongée peut présenter une longueur de passage, et le corps de maintien peut être exempt de nervure de rigidification dans le sens de la longueur de passage. L'élément de pontage assure seul la fonction de renfort au niveau de l'ouverture allongée. En d'autres termes, le corps de maintien comprend une paroi lisse dans laquelle est ménagée l'ouverture allongée. Ainsi il est possible de proposer un dispositif lumineux fin et long en mesure de diffuser une lumière continue. En effet des nervures transversales sur le chemin de la lumière engendreraient nécessairement des zones d'ombres complexes à masquer.

Selon un mode de réalisation, l'ouverture allongée peut être continue et/ou le corps de maintien peut être exempt de nervures ou barrettes transversales à l'ouverture allongée et/ou en regard de l'ouverture allongée. L'élément de pontage assure seul la fonction de renfort au niveau de l'ouverture allongée. En d'autres termes, le corps de maintien comprend une paroi lisse dans laquelle est ménagée l'ouverture allongée. En particulier, l'ouverture et/ou la paroi interne est dépourvu(e) de rebords en relief en bord d'ouverture. La paroi interne, au niveau de l'ouverture allongée est plate et ne présente qu'une épaisseur de paroi à ce niveau. On peut en particulier prévoir que la paroi interne est essentiellement perpendiculaire au trajet de la lumière.

Selon un mode de réalisation, au moins l'un du corps de maintien ou de l'élément de pontage peut comprendre une protrusion traversant une paroi de l'autre du corps de maintien ou de l'élément de pontage. La protrusion peut être un index, une patte, de préférence cylindrique ou avec un angle de dépouille, une colonne... La protrusion peut être formée de manière monobloc ou intégrale avec le corps de maintien ou l'élément de pontage, mais peut être aussi une pièce rapportée ou assemblée.

Selon un mode de réalisation, au moins l'un du corps de maintien ou de l'élément de pontage peut comprendre une portion soudée sur l'autre du corps de maintien ou de l'élément de pontage. On peut envisager une soudure thermique, laser ou par ultra sons. On peut aussi envisager un collage.

Selon un mode de réalisation, au moins l'un du corps de maintien ou de l'élément de pontage peut comprendre une portion emboitée dans l'autre du corps de maintien ou de l'élément de pontage. On peut prévoir un encastrement avec des contre formes, une rainure en Té, ou en queue d'aronde...

Selon un mode de réalisation, au moins l'un du corps de maintien ou de l'élément de pontage peut comprendre une portion déformée plastiquement, et/ou rabattue plastiquement, et/ou bouterollée sur l'autre du corps de maintien ou de l'élément de pontage. Une telle déformation peut être obtenue par rivetage ou par déformation à chaud pour sceller les pièces ensembles.

Selon un mode de réalisation, au moins l'un du corps de maintien ou de l'élément de pontage peut comprendre une portion surmoulée sur l'autre du corps de maintien ou de l'élément de pontage.

Un deuxième aspect de l'invention se rapporte à un volant de véhicule comprenant un dispositif lumineux selon le premier aspect.

Un troisième aspect de l'invention se rapporte à un véhicule automobile comprenant un dispositif lumineux selon le premier aspect.

Un autre aspect se rapporte à un procédé de fabrication, dans lequel une étape de montage ou d'assemblage de l'élément de pontage peut être effectuée sur le dispositif lumineux, et/ou sur le dispositif lumineux seul, et/ou avant le montage du dispositif lumineux sur le volant, et/ou avant la fixation du corps de maintien sur le volant, et/ou avant une étape de gainage du volant. De préférence, l'élément de pontage peut être fixé, attaché, engagé avec le corps de maintien avant que des efforts de fabrication ou d'assemblage sur le volant soient appliqués sur le corps de maintien. Selon cet aspect, l'élément de pontage est attaché au corps de maintien ou à la paroi interne le plus tôt possible dans les étapes de fabrication, et en tout cas avant d'appliquer des efforts significatifs au corps de maintien qui pourraient déformer l'ouverture allongée.

### Description des figures

D'autres caractéristiques et avantages de la présente invention apparaîtront plus clairement à la lecture de la description détaillée qui suit, où des modes de réalisation de l'invention sont donnés à titre d'exemples nullement limitatifs et illustrés par les dessins annexés, dans lesquels :
[fig. 1] représente une vue de face d'un volant comportant un dispositif lumineux dans la jante ;
[fig. 2] représente une coupe de la jante au niveau du dispositif lumineux avec une source lumineuse agencée pour diffuser de la lumière vers un occupant du véhicule au travers d'une ouverture allongée du dispositif lumineux ;
[fig. 3] représente la coupe de la figure 2, au niveau d'une mise en œuvre d'un élément de pontage agencé entre deux bords de l'ouverture allongée ;
[fig. 4] représente une mise en œuvre particulière de l'élément de pontage de la figure 2 ;
[fig. 5] représente une autre mise en œuvre particulière de l'élément de pontage de la figure 2 ;
[fig. 6] représente une autre mise en œuvre particulière de l'élément de pontage de la figure 2 ;
[fig. 7] représente la coupe de la figure 3, avec la une mise en œuvre de l'élément de pontage de la figure 6 ;
[fig. 8] représente une autre mise en œuvre particulière de l'élément de pontage dans le dispositif de la figure 2 ;
[fig. 9] représente une autre mise en oeuvre particulière de l'élément de pontage dans le dispositif de la figure 2, qui ne fait pas partie de la présente invention;
[fig. 10] représente une autre mise en oeuvre particulière de l'élément de pontage dans le dispositif de la figure 2.

### Description détaillée de mode(s) de réalisation

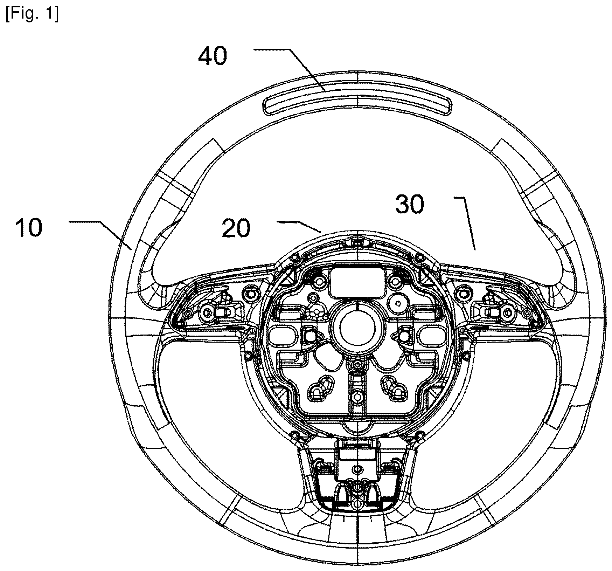

La figure 1 représente un volant de véhicule qui comprend typiquement une jante 10 reliée à un moyeu 20 par plusieurs branches 30. La jante 10 est équipée dans la position supérieure ou dite « à 12 heures », d'un dispositif lumineux 40. Ce dispositif lumineux 40 présente une paroi externe d'affichage qui s'étend le long de la jante sur un secteur angulaire d'environ 30° à 40°, mais on peut prévoir une étendue angulaire plus ou moins importante, jusqu'à 180 ° ou même plus par exemple.

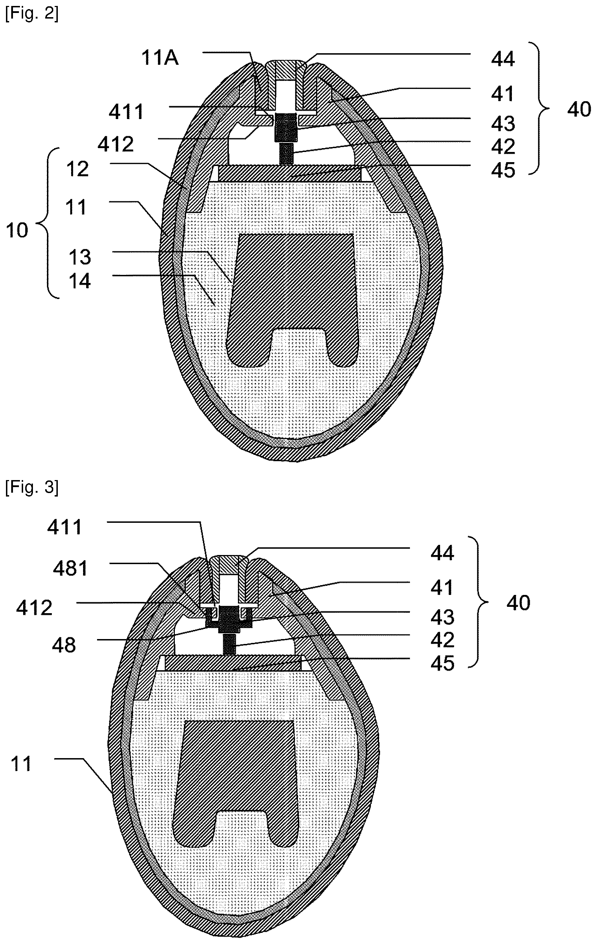

La figure 2 représente une coupe transversale de la jante 10 de la figure 1, et la jante comprend typiquement :
- une armature 13 (ou ossature), par exemple en magnésium,
- un matériau de moussage ou de garnissage 14, par exemple du polyuréthane, surmoulé sur l'armature 13,
- un appareil électrique ou électronique 12, par exemple un capteur de détection de contact, ou une gaine chauffante, (il est entendu qu'un tel appareil électrique est accessoire et peut être omis),
- une gaine 11, qui forme une peau externe de la jante, en cuir par exemple.

Le dispositif lumineux comprend quant à lui :
- un circuit imprimé 45,
- des sources lumineuses 42 (des diodes électroluminescentes par exemple), montées sur le circuit imprimé 45,
- un corps de maintien 41, sur lequel est fixé le circuit imprimé, et qui sert aussi de support à l'appareil électrique ou électronique 12 et à la gaine 11, en particulier au niveau de rabats 11A de la gaine 11,
- un guide lumière 43,
- un écran diffuseur 44.

On peut prévoir :
- le guide lumière 43 et l'écran diffuseur 44 en polymère transparent, par exemple du polycarbonate ou du polyméthacrylate de méthyle (PMMA),
- le corps de maintien 41 en polymère rigide et aisément moulable par injection, comme du polyamide, de préférence chargé avec par exemple des fibres de verre,
- le circuit imprimé en résine avec des fibres, comme par exemple une résine époxy avec des fibres de verre.

Le corps de maintien 41 forme donc une continuité de surface avec le matériau de moussage 14 pour recevoir l'appareil électrique ou électronique 12 et la gaine 11, qui sont montés typiquement une fois le dispositif lumineux assemblé et monté sur le volant. La partie supérieure du corps de maintien forme même une rainure qui reçoit les rabats 11A de la gaine 11, et ensuite l'écran diffuseur 44. Au fond de cette rainure, une ouverture allongée 411 est formée dans une paroi interne 412.

Les sources lumineuses 42 sont toutes situées dans un même plan défini par le circuit imprimé 45, et en regard du guide lumière 43, lui-même engagé dans l'ouverture allongée 411 ménagée dans la paroi interne 412, pour guider la lumière des sources lumineuses 42 vers l'écran diffuseur 44.

Comme dit ci-dessus, et visible figure 2, le corps de maintien 41 sert de support à la gaine 11, qui est directement visible et prise en main par le conducteur du véhicule. Il est donc important que la géométrie soit précise pour éviter tout défaut d'aspect ou de toucher. De plus, il est évidemment également important de ne pas avoir de jour ou de bâillement entre l'écran diffuseur 44 et les rabats 11A.

A cet effet, il faut garantir que le corps de maintien ne se déforme pas. Cependant, comme également vu ci-dessus, l'ouverture allongée 411 est formée dans la paroi interne 412 lisse, et peut s'étendre sur tout le secteur angulaire de la jante couvert par le dispositif lumineux. Afin de ne pas provoquer de variations de luminosité, il est important de procurer une ouverture allongée 411 continue, sans nervures transversales. Des nervures longitudinales sur les bords de l'ouverture allongée 411 du côté de l'écran diffuseur 44 ne sont pas non plus souhaitables pour limiter au minimum l'ouverture dans la jante visible par le conducteur.

Une telle ouverture allongée 411 peut affaiblir le corps de maintien et peut conduire à un écartement ou une ouverture de l'ouverture allongée, notamment par exemple en raison des rabats 11A qui peuvent exercer un effort d'écartement, notamment lors de la pose de la gaine 11 qui doit être tendue, une fois le dispositif lumineux assemblé et monté sur la jante 10.

Pour contrer cette possibilité d'écartement des bords de l'ouverture allongée 411, il est proposé de prévoir un élément de pontage 48 au niveau de l'ouverture allongée 411, comme le montre la figure 3 qui est une coupe transversale de la jante 10 au niveau justement de l'élément de pontage 48.

En effet, le guide lumière 43, dans ce mode de réalisation, comprend deux index 481 liés par des bras au reste du corps du guide lumière 43, et les deux index 481 sont chacun engagés dans la paroi interne 412 du corps de maintien. En conséquence, l'élément de pontage procure un lien rigide entre les deux bords de l'ouverture allongée 411 qui ne peut plus s'ouvrir lors des opérations ultérieures de fabrication, même si des efforts de tension, traction sont appliqués (typiquement lors du gainage). Ainsi, sa largeur est garantie et le dimensionnel de la jante 10 et l'absence de jour entre l'écran diffuseur 44 et les rabats 11A sont assurés sans occuper de place dans la partie supérieure du dispositif.

Dans le mode de réalisation ci-dessus, l'élément de pontage 48 est formé par les index 481 et la partie du corps du guide lumière 43 où sont ancré les index 481, et se trouve entre la surface externe et les sources lumineuses 42. L'élément de pontage 48, et au moins la portion de liaison en regard ou qui chevauche l'ouverture allongée 411, est transparent, pour ne pas perturber la diffusion de lumière vers le conducteur.

Dans le mode de réalisation ci-dessus, l'élément de pontage 48 est formé par les index 481, et on peut prévoir une sur longueur pour les index 481 afin qu'ils dépassent de la paroi interne 412, pour ensuite les déformer (à chaud ou par rivetage ou bouterollage) et obtenir une liaison définitive.

On peut alternativement prévoir des pattes flexibles avec un crochet en extrémité des index 481pour procurer un emboîtement élastique.

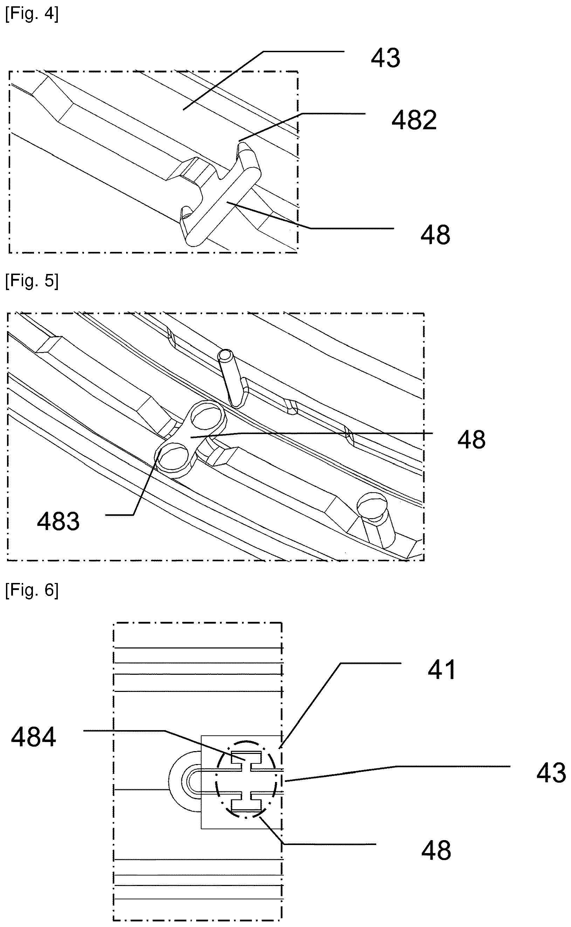

La figure 4 montre une alternative de l'élément de liaison 48, avec, au lieu des index 481 qui traversent la paroi interne 412, des pions de soudure 482, destinés à permettre une soudure ultra-sons du guide lumière 43 sur la paroi interne 412. Ici encore, l'élément de pontage 48 est formé sur le guide lumière transparent, et relie les deux bords de l'ouverture allongée 411.

La figure 5 montre une autre alternative de l'élément de pontage 48, avec ici deux trous 483 qui peuvent recevoir des pions ou tétons qui sont en protubérance sur la face inférieure de la paroi interne 412. Dans ce mode de réalisation, on peut prévoir une sur longueur pour les pions ou tétons qui sont en protubérance afin qu'ils dépassent des trous 483, pour ensuite les déformer (à chaud ou par rivetage ou bouterollage) et obtenir une liaison définitive.

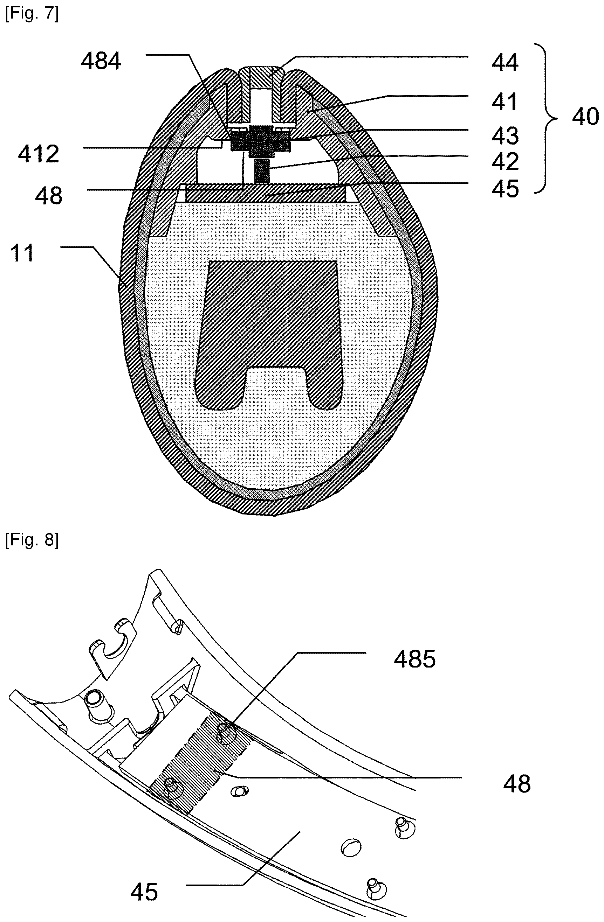

Les figures 6 et 7 montrent une autre alternative de l'élément de pontage 48, avec ici une liaison procurée par des parties mâles 484 formées sur le guide lumière 43, et engagées dans des contre formes du corps de maintien 41. Dans cet exemple, les parties mâles 484 sont des Té, et les contre formes du corps de maintien sont des rainures en Té. Cependant, on peut prévoir d'autres formes, comme par exemple une queue d'aronde.

La figure 8 représente une alternative dans laquelle l'élément de pontage 48 est formé sur et par le circuit imprimé 45 (les sources lumineuses 42 ne sont pas visibles car le circuit imprimé est vu de dessous), sur lequel des pions 485 sont ménagés. Les pions 485 ont une longueur calculée pour venir s'engager dans le circuit imprimé 45, et dans la paroi interne 412 (cachée par le circuit imprimé 45. Les pions 485 peuvent être déformés, soudés ou attachés de toute sorte de manière sur le circuit imprimé 45, et on peut prévoir de les rapporter de la même manière sur la paroi interne 412, ou alors les prévoir dans la même matière et monobloc (le corps de maintien 41 est alors formé par moulage directement avec les pions 485). Sur la figure 8, la zone hachurée représente l'élément de pontage 48 et en particulier sa portion de liaison qui est en regard de l'ouverture allongée 411. Les sources lumineuses 42 sont donc agencées entre la portion de liaison et l'ouverture allongée, la portion de liaison peut donc être opaque, car elle est opposée à l'utilisateur par rapport aux sources lumineuses 42. Avantageusement, les pions 485 sont formés dans le corps de maintien 41 au voisinage de l'ouverture allongée 411.

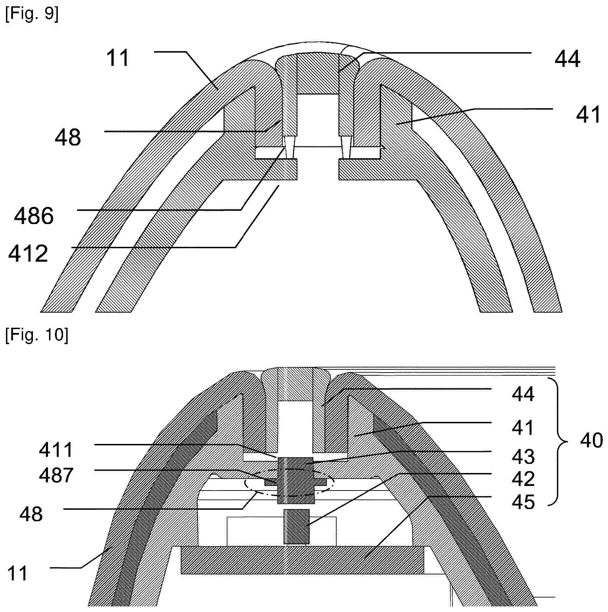

La figure 9 représente un exemple de réalisation ne faisant pas partie de la présente invention, où l'élément de pontage 48 est formé par une portion du diffuseur 44. En effet, le diffuseur 44 est en forme de U inséré à l'envers dans la rainure formée par le corps de maintien 41 et les rabats de la gaine 11, et comporte des protubérances 486 permettant par exemple une soudure par ultra sons sur la paroi interne 412. On peut aussi envisager un clipsage dans la paroi interne 412 par exemple. Ainsi, le diffuseur 44, au niveau des protubérances 486, est parfaitement ancré de part est d'autre de l'ouverture allongée, si bien que le corps de maintien 41 est renforcé par l'élément de pontage 48.

La figure 10 représente une demière alternative de l'élément de pontage 48, qui est formé par une partie centrale du guide lumière 43, ce dernier étant directement surmoulé sur le corps de maintien 41 et relié par deux parties surmoulées 487, chacune surmoulée sur un bord de l'ouverture allongée 411. Une alternative pourrait consister à surmouler le corps de maintien 41 sur le guide lumière 43

Dans tous les modes de réalisation, l'élément de pontage 48 procure une liaison entre des deux bords de l'ouverture allongée 411, pour en garantir la largeur et l'empêcher de s'ouvrir ou s'écarter. On peut prévoir un tel élément de pontage 48 à intervalles réguliers le long de l'ouverture allongée 411, comme par exemple tous les 20 mm ou tous les 5° ou 10° de secteur angulaire centré sur l'axe de rotation du volant en vue de face comme sur la figure 1.

En tout état de cause, l'élément de pontage évite de prévoir une rainure transversale sur la rainure qui pourrait provoquer des variations de luminosité ou d'aspect d'affichage.

On comprendra que diverses modifications et/ou améliorations évidentes pour l'homme du métier peuvent être apportées aux différents modes de réalisation de l'invention décrits dans la présente description sans sortir du cadre de l'invention. En particulier, on pourra noter que l'élément de pontage et/ou le dispositif lumineux peut être assemblé complétement avant son intégration sur la jante du volant. On peut noter aussi que l'élément de pontage peut ou doit être assemblé depuis un côté interne de la jante, c'est-à-dire par le dessous sur les figures 3, 7, 10, ce qui laisse libre l'accès par le dessus. On peut aussi noter que l'on peut combiner les modes de pontage, un même élément de pontage peut avoir d'une part un pontage à souder ou bouteroller, et d'autre part un pontage qui ne fait que s'engager dans une contre forme. On peut aussi avoir plusieurs éléments de pontage qui se prennent chacun sur le corps de maintien, ou entre eux ce qui permet de renforcer le corps de maintien (41).

## Revendications

1. Dispositif lumineux (40) pour une jante (10) de volant de véhicule, comprenant :
- une pluralité de sources lumineuses (42), agencée pour émettre de la lumière vers une paroi externe d'affichage de la jante (10)
- un corps de maintien (41), comprenant une paroi interne (412) avec une ouverture allongée (411) présentant une largeur de passage prédéterminée pour laisser passer la lumière émise vers la paroi externe d'affichage,
- au moins un élément de pontage (48) engagé avec le corps de maintien (41) pour limiter un agrandissement de la largeur de passage prédéterminée,
**caractérisé en ce que** le au moins un élément de pontage (48) est au moins partiellement agencé d'un côté de la paroi interne (412) opposé à la paroi externe d'affichage.

2. Dispositif lumineux (40) selon la revendication 1, dans lequel l'élément de pontage (48) peut présenter une portion de liaison en regard de l'ouverture allongée (411), et dans lequel au moins une source lumineuse (42) est agencée entre l'élément de pontage (48) et l'ouverture allongée (411).

3. Dispositif lumineux (40) selon la revendication 1, dans lequel l'élément de pontage (48) présente une portion de liaison en regard de l'ouverture allongée (411), dans lequel la portion de liaison est agencée en regard d'au moins une source lumineuse (42), dans lequel :
- la portion de liaison est agencée entre ladite source lumineuse (42) et la paroi externe d'affichage, et la portion de liaison est transparente,
ou dans lequel :
- ladite source lumineuse (42) est agencée entre la paroi externe d'affichage et la portion de liaison, et la portion de liaison est de préférence opaque.

4. Dispositif lumineux (40) selon l'une des revendications 1 à 3, comprenant un circuit imprimé (45) supportant la pluralité de sources lumineuses (42), dans lequel l'élément de pontage (48) est formé par le circuit imprimé (45).

5. Dispositif lumineux (40) selon l'une des revendications 1 à 3, comprenant un écran ou diffuseur de lumière (44) formant la paroi externe d'affichage.

6. Dispositif lumineux (40) selon l'une des revendications 1 à 5, la jante (10) comprenant une gaine (11) extérieure, dans lequel l'élément de pontage (48) est engagé avec le corps de maintien (41) dans une zone exempte de gaine (11).

7. Dispositif lumineux (40) selon l'une des revendications 1 à 6, dans lequel l'ouverture allongée (411) présente une longueur de passage, et dans lequel le corps de maintien (41) est exempt de nervure de rigidification dans le sens de la longueur de passage.

8. Dispositif lumineux (40) selon l'une des revendications 1 à 7, dans lequel l'ouverture allongée (411) est continue et/ou dans lequel le corps de maintien (41) est exempt de nervures ou barrettes transversales à l'ouverture allongée (411) et/ou en regard de l'ouverture allongée (411).

9. Dispositif lumineux (40) selon l'une des revendications 1 à 8, dans lequel au moins l'un du corps de maintien (41) ou de l'élément de pontage (48) comprend une protrusion (481 ; 484 ; 485) traversant une paroi de l'autre du corps de maintien (41) ou de l'élément de pontage (48).

10. Dispositif lumineux (40) selon l'une des revendications 1 à 9, dans lequel au moins l'un du corps de maintien (41) ou de l'élément de pontage (48) comprend une portion soudée sur l'autre du corps de maintien (41) ou de l'élément de pontage (48).

11. Dispositif lumineux (40) selon l'une des revendications 1 à 10, dans lequel au moins l'un du corps de maintien (41) ou de l'élément de pontage (48) comprend une portion emboitée (481 ; 484) dans l'autre du corps de maintien (41) ou de l'élément de pontage (48).

12. Dispositif lumineux (40) selon l'une des revendications 1 à 11, dans lequel au moins l'un du corps de maintien (41) ou de l'élément de pontage (48) comprend une portion déformée plastiquement, et/ou rabattue plastiquement, et/ou bouterollée sur l'autre du corps de maintien (41) ou de l'élément de pontage (48).

13. Dispositif lumineux (40) selon l'une des revendications 1 à 12, dans lequel au moins l'un du corps de maintien (41) ou de l'élément de pontage (48) comprend une portion surmoulée (487) sur l'autre du corps de maintien (41) ou de l'élément de pontage (48).

14. Volant de véhicule comprenant un dispositif lumineux (40) selon l'une des revendications 1 à 13.

15. Véhicule automobile comprenant un dispositif lumineux (40) selon l'une des revendications 1 à 13.

## Patentansprüche

1. Leuchtvorrichtung (40) für einen Kranz (10) eines Fahrzeuglenkrads, umfassend:
- eine Vielzahl von Lichtquellen (42), die zum Emittieren von Licht zu einer äußeren Anzeigewand des Kranzes (10) angeordnet ist
- einen Haltekörper (41), umfassend eine innere Wand (412) mit einer länglichen Öffnung (411), die eine vorbestimmte Durchgangsbreite zum Durchlassen des Lichts, das zu der äußeren Anzeigewand emittiert wird, aufweist,
- mindestens ein Überbrückungselement (48), das mit dem Haltekörper (41) zum Begrenzen einer Vergrößerung der vorbestimmten Durchgangsbreite in Eingriff steht,
**dadurch gekennzeichnet, dass** das mindestens eine Überbrückungselement (48) mindestens teilweise auf einer Seite der Innenwand (412) angeordnet ist, die der äußeren Anzeigewand gegenüberliegt.

2. Leuchtvorrichtung (40) nach Anspruch 1, wobei das Überbrückungselement (48) einen Verbindungsabschnitt gegenüber der länglichen Öffnung (411) aufweisen kann, und wobei mindestens eine Lichtquelle (42) zwischen dem Überbrückungselement (48) und der länglichen Öffnung (411) angeordnet ist.

3. Leuchtvorrichtung (40) nach Anspruch 1, wobei das Überbrückungselement (48) einen Verbindungsabschnitt gegenüber der länglichen Öffnung (411) aufweist, wobei der Verbindungsabschnitt gegenüber mindestens einer Lichtquelle (42) angeordnet ist,
wobei:
- der Verbindungsabschnitt zwischen der Lichtquelle (42) und der äußeren Anzeigewand angeordnet ist, und der Verbindungsabschnitt transparent ist,
oder wobei:
- die Lichtquelle (42) zwischen der äußeren Anzeigewand und dem Verbindungsabschnitt angeordnet ist, und der Verbindungsabschnitt vorzugsweise lichtundurchlässig ist.

4. Leuchtvorrichtung (40) nach einem der Ansprüche 1 bis 3, umfassend eine Leiterplatte (45), die die Vielzahl von Lichtquellen (42) trägt, wobei das Überbrückungselement (48) durch die Leiterplatte (45) ausgebildet ist.

5. Leuchtvorrichtung (40) nach einem der Ansprüche 1 bis 3, umfassend einen Bildschirm oder einen Lichtdiffusor (44), der die äußere Anzeigewand ausbildet.

6. Leuchtvorrichtung (40) nach einem der Ansprüche 1 bis 5, der Kranz (10) umfassend eine äußere Umhüllung (11), wobei das Überbrückungselement (48) mit dem Haltekörper (41) in einem von der Umhüllung (11) freien Bereich in Eingriff steht.

7. Leuchtvorrichtung (40) nach einem der Ansprüche 1 bis 6, wobei die längliche Öffnung (411) eine Durchgangslänge aufweist, und wobei der Haltekörper (41) frei von Versteifungsrippen in Richtung der Durchgangslänge ist.

8. Leuchtvorrichtung (40) nach einem der Ansprüche 1 bis 7, wobei die längliche Öffnung (411) durchgehend ist und/oder wobei der Haltekörper (41) frei von Rippen oder Stegen quer zu der länglichen Öffnung (411) und/oder gegenüber der länglichen Öffnung (411) ist.

9. Leuchtvorrichtung (40) nach einem der Ansprüche 1 bis 8, wobei mindestens eines des Haltekörpers (41) oder des Überbrückungselements (48) einen Vorsprung (481; 484; 485) umfasst, der eine Wand des anderen des Haltekörpers (41) oder des Überbrückungselements (48) durchquert.

10. Leuchtvorrichtung (40) nach einem der Ansprüche 1 bis 9, wobei mindestens eines des Haltekörpers (41) oder des Überbrückungselements (48) einen Abschnitt umfasst, der auf den anderen des Haltekörpers (41) oder des Überbrückungselements (48) geschweißt ist.

11. Leuchtvorrichtung (40) nach einem der Ansprüche 1 bis 10, wobei mindestens eines des Haltekörpers (41) oder des Überbrückungselements (48) einen Abschnitt (481; 484), der in den anderen des Haltekörpers (41) oder des Überbrückungselements (48) eingefügt ist, umfasst.

12. Leuchtvorrichtung (40) nach einem der Ansprüche 1 bis 11, wobei mindestens eines des Haltekörpers (41) oder des Überbrückungselements (48) einen plastisch verformten und/oder plastisch umgebogenen und/oder auf den anderen des Haltekörpers (41) oder das Überbrückungselements (48) aufgenieteten Abschnitt umfasst.

13. Leuchtvorrichtung (40) nach einem der Ansprüche 1 bis 12, wobei mindestens eines des Haltekörpers (41) oder des Überbrückungselements (48) einen überspritzten Abschnitt (487) auf dem anderen des Haltekörpers (41) oder des Überbrückungselements (48) umfasst.

14. Fahrzeuglenkrad, umfassend eine Leuchtvorrichtung (40) nach einem der Ansprüche 1 bis 13.

15. Kraftfahrzeug, umfassend eine Leuchtvorrichtung (40) nach einem der Ansprüche 1 bis 13.

## Claims

1. A lighting device (40) for a vehicle steering wheel rim (10), comprising:
- a plurality of light sources (42) arranged so as to emit light toward an external display wall of the rim (10)
- a holding body (41) comprising an internal wall (412) with an elongate opening (411) having a predetermined passage width to allow the light emitted toward the external display wall to pass through,
- at least one bridging element (48) engaged with the holding body (41) to limit enlargement of the predetermined passage width,
**characterized in that** the at least one bridging element (48) is at least partially arranged on a side of the internal wall (412) opposite the external display wall.

2. The lighting device (40) according to claim 1, wherein the bridging element (48) may have a connecting portion opposite the elongate opening (411), and wherein at least one light source (42) is arranged between the bridging element (48) and the elongate opening (411).

3. The lighting device (40) according to claim 1, wherein the bridging element (48) has a connecting portion opposite the elongate opening (411), wherein the connecting portion is arranged opposite at least one light source (42),
wherein:
- the connecting portion is arranged between said light source (42) and the external display wall, and the connecting portion is transparent,
or wherein:
- said light source (42) is arranged between the external display wall and the connecting portion, and the connecting portion is preferably opaque.

4. The lighting device (40) according to one of claims 1 to 3, comprising a printed circuit (45) supporting the plurality of light sources (42), wherein the bridging element (48) is formed by the printed circuit (45).

5. The lighting device (40) according to one of claims 1 to 3, comprising a screen or light diffuser (44) forming the external display wall.

6. The lighting device (40) according to one of claims 1 to 5, the rim (10) comprising an outer sheath (11), wherein the bridging element (48) is engaged with the holding body (41) in a zone that is free of the sheath (11).

7. The lighting device (40) according to one of claims 1 to 6, wherein the elongate opening (411) has a passage length, and wherein the holding body (41) is free of stiffening ribs in the passage length direction.

8. The lighting device (40) according to one of claims 1 to 7, wherein the elongate opening (411) is continuous and/or wherein the holding body (41) is free of ribs or bars transverse to the elongate opening (411) and/or opposite the elongate opening (411).

9. The lighting device (40) according to one of claims 1 to 8, wherein at least one of the holding body (41) or the bridging element (48) comprises a protrusion (481; 484; 485) passing through a wall of the other of the holding body (41) or the bridging element (48).

10. The lighting device (40) according to one of claims 1 to 9, wherein at least one of the holding body (41) or the bridging element (48) comprises a portion welded to the other of the holding body (41) or the bridging element (48).

11. The lighting device (40) according to one of claims 1 to 10, wherein at least one of the holding body (41) or the bridging element (48) comprises a portion embedded (481; 484) in the other of the holding body (41) or the bridging element (48).

12. The lighting device (40) according to one of claims 1 to 11, wherein at least one of the holding body (41) or the bridging element (48) comprises a portion that is plastically deformed, and/or plastically folded, and/or headed to the other of the holding body (41) or the bridging element (48).

13. The lighting device (40) according to one of claims 1 to 12, wherein at least one of the holding body (41) or the bridging element (48) comprises a portion overmolded (487) onto the other of the holding body (41) or the bridging element (48).

14. A vehicle steering wheel comprising a lighting device (40) according to one of claims 1 to 13.

15. A motor vehicle comprising a lighting device (40) according to one of claims 1 to 13.
